# EUROPÄISCHE PATENTSCHRIFT

(11) **EP 1 675 753 B1**
(45) Veröffentlichungstag und Bekanntmachung des Hinweises auf die Patenterteilung: **02.07.2008**
(21) Anmeldenummer: 04790650.8
(22) Anmeldetag: 20.10.2004
(51) Int. Cl.: B60R 5/04

(54) **HECKVERLÄNGERUNG FÜR EIN KRAFTFAHRZEUG**
REAR-END EXTENSION FOR A MOTOR VEHICLE
PARTIE DE PROLONGEMENT ARRIERE POUR VEHICULE AUTOMOBILE

(30) Priorität: 22.10.2003 DE 10350293
(43) Veröffentlichungstag der Anmeldung: 05.07.2006
(73) Patentinhaber: Storch GmbH, 75248 Ölbronn-Dürrn (DE)
(72) Erfinder: STORCH, Michael, 75248 Ölbronn-Dürrn (DE)
(74) Vertreter: Patentanwälte Ruff, Wilhelm, Beier, Dauster & Partner
(86) Internationale Anmeldenummer: PCT/EP2004/011838
(87) Internationale Veröffentlichungsnummer: WO 2005/039933

(56) Entgegenhaltungen:
- EP-A- 0 661 202
- WO-A-86/06337
- FR-A- 964 416
- GB-A- 2 218 384
- US-A- 4 221 425

## Beschreibung

Die Erfindung betrifft eine Heckverlängerung für ein Kraftfahrzeug, die an einem Karosserieheckausschnitt mit Hilfe lösbarer Befestigungsmittel befestigbar ist.

Eine solche Heckverlängerung ist aus der DT 25 06 620 A1 bekannt. Um den Koffer- oder Laderaum des Kraftfahrzeugs zu vergrößern, wird die Heckklappe in einen geöffneten Zustand überführt. Anschließend wird ein stoffbespannter Rahmen an den Heckausschnitt mit Hilfe lösbarer Befestigungsmittel angesetzt, der nach oben offen ist. Auf den offenen Bereich wird die Heckklappe aufgelegt und mit dem stoffbespannten Rahmen verbunden. Hierdurch wird die gewünschte Kofferraumvergrö*ßerung erzielt.

Aus der DE 197 24 630 A1 ist eine ähnliche Heckverlängerung bekannt, die ebenfalls als oberseitigen Abschluss eine geöffnete Heckklappe verwendet. Die geöffnete Heckklappe wird hier durch Stützstreben in ihrer geöffneten Position gehalten. Zudem ist eine feste Bodenplatte vorgesehen. Der verbleibende Freiraum ist durch eine Stoffbespannung überzogen, die mit Hilfe von Schnellbefestigungsmitteln mit dem Karosserieausschnitt verbunden wird.

Eine Heckverlängerung nach dem Oberbegriff des Anspruchs 1 ist aus der EP 0 661 202 bekannt.

Aufgabe der Erfindung ist es, eine Heckverlängerung der eingangs genannten Art zu schaffen, die eine dauerhafte und vollwertige Laderaumvergrößerung mit einfachen Mitteln ermöglicht.

Diese Aufgabe wird durch eine Heckverlängerung nach Anspruch 1 gelöst. Vorzugsweise ist das Heckmodul als ein- oder mehrteilige Kunststoffkonstruktion gestaltet. Vorzugsweise ist die Kunststoffkonstruktion zumindest abschnittsweise zweischalig mit einer Innenschale und einer Außenschale ausgebildet. Hierdurch ist es möglich, Isolier- oder Energieabsorptionsmaterial in den Zwischenraum zwischen Außen- und Innenschale einzubringen und so auch in diesem Heckbereich eine ausreichende Isolierung des Fahrzeugs und/oder E-nergieabsorptionsmaßnahmen für einen Fahrzeugaufprall bereitzustellen. Es ist auch möglich, den Zwischenraum als Aufnahmeraum für Funktionsteile wie Warndreieck, Verbandskasten o.ä. oder als zusätzlichen Stauraum für Transportgegenstände oder Ladegut vorzusehen. Durch die Verwendung der ohnehin für das wenigstens eine Karosserieheckteil karosserieseitig vorgesehenen Befestigungspunkte wird in die Karosseriestruktur des Kraftfahrzeugs nicht eingegriffen. Denn es müssen keine zusätzlichen Befestigungspunkte vorgesehen werden. Das eigentliche vorhandene Karosserieheckteil, insbesondere eine Heckklappe oder wenigstens eine Hecktür, wird in einfacher Weise entfernt und an den karosserieseitig verbliebenen Befestigungspunkten das erfindungsgemäße Heckmodul befestigt. Dadurch, dass die Randkontur des Heckmoduls auf den umlaufenden Rand des Karosserieheckausschnittes abgestimmt ist, kann auch die karosserieseitig für das wenigstens eine Karosserieheckteil vorhandene Dichtung vorteilhaft eingesetzt werden, um die Abdichtung gegenüber dem angesetzten Heckmodul zu erzielen. Dadurch wird ein guter Schall- und Wärmeschutz für den Fahrzeuginnenraum erreicht, obwohl das ursprünglich vorhandene Karosserieheckteil entfernt worden ist. Zudem wird eine Abdichtung gegen Wassereintritt geschaffen.

Die erfindungsgemäße Lösung eignet sich insbesondere für den Einsatz bei einem Kleinwagen in Form eines Smart.

In Ausgestaltung der Erfindung weist das Heckmodul eine schalenartige Bauform auf und ist zu einem Fahrzeuginnenraum hin offen. Das Heckmodul wird somit nach Entfernen des Karosserieheckteiles so an die Randkontur des Karosserieheckausschnittes angesetzt, dass die offene Seite des Heckmoduls zum Fahrzeuginnenraum weist.

In weiterer Ausgestaltung der Erfindung ist das Heckmodul mehrteilig ausgeführt. Vorteilhaft ist wenigstens ein Modulteil des Heckmoduls zwischen einer Schließposition und wenigstens einer Öffnungsposition beweglich angeordnet. Vorzugsweise weist der bewegliche Modulteil eine Heckscheibenanordnung auf. Die Heckscheibenanordnung ist in dem Modulteil vorzugsweise räumlich integriert. Die Heckscheibenanordnung kann aus einer oder mehreren Scheiben bestehen. Dadurch ist es möglich, durch den Modulteil bzw. die Heckscheibenanordnung eine Heckklappenfunktion bei dem Heckmodul zu verwirklichen. Das Vorsehen der Heckscheibenanordnung gewährleistet für die Fahrzeuginsassen einen Durchblick nach hinten.

In weiterer Ausgestaltung der Erfindung sind die lösbaren Befestigungsmittel an dem Heckmodul vorgesehen. Diese lösbaren Befestigungsmittel werden mit den karosserieseitigen Befestigungspunkten im Bereich des Karosserieheckausschnittes verbunden. Gemäß der Erfindung, ist zur Lagerung des beweglichen Modulteils an einem stationär mit der Karosserie verbundenen Modulteil wenigstens eine Scharniereinheit vorgesehen. Die Scharniereinheit kann als Schwenkgelenk oder auch als ein kombiniertes Schwenk-/Hubgelenk mit überlagerten Bewegungsbahnen gestaltet sein. Die überlagerte Schwenk-/Hubbewegung hat den Vorteil, dass der bewegliche Modulteil raumsparend in die Öffnungsposition überführt werden kann. Bei einem Schwenkgelenk ist vorzugsweise ein einachsiges Gelenk vorgesehen. Bei einem Schwenk-/Hubgelenk ist vorzugsweise ein mehrachsiges Gelenk, insbesondere ein Vier- oder Siebengelenk, vorgesehen, das die aufeinanderfolgenden, unterschiedlichen Bewegungsbahnen bewirkt.

In weiterer Ausgestaltung der Erfindung ist als Befestigungsmittel wenigstens eine Scharnieranordnung und wenigstens ein Spannverschluss vorgesehen. Vorzugsweise ist der wenigstens eine Spannverschluss vom Fahrzeuginnenraum her zugänglich, so dass eine Bedienperson von innen aus das Heckmodul lösen kann. Der Spannverschluss ist bei einer anderen Ausführungsform vorzugsweise innenseitig angeordnet und nach einem Öffnen einer Heckklappe des Heckmoduls durch einfaches Ergreifen einer außerhalb des Fahrzeugs befindlichen Person von oben her zugänglich. Mittels der Scharnieranordnung kann das gesamte Heckmodul vorteilhaft in eine Öffnungsposition nach oben geschwenkt werden, so dass der Heckbereich des Fahrzeugs gut zugänglich ist. Diese Öffnungsposition kann als Montageposition für den Einbau eines Inneneinrichtungsmoduls oder als Wartungsposition dienen, um eine Wartung an entsprechenden Kraftfahrzeug-Funktionseinheiten durchzuführen. Anstelle eines Spannverschlusses ist bei einer Ausführungsform eine Befestigungseinheit in Form eines Haltebügelsystems vorgesehen.

In weiterer Ausgestaltung der Erfindung weist das Heckmodul einen Bodenbereich auf, der in montiertem Zustand des Heckmoduls einen Laderaumboden des Fahrzeuginnenraumes überdeckt. Dadurch wird ein einheitlicher und durchgängiger Bodenbereich für den gesamten Laderaum des Fahrzeuginnenraumes erzielt. Vorteilhaft kann durch diesen Bodenbereich auch eine Abdeckung unterer Befestigungsmittel des Heckmoduls erzielt werden. Falls der Laderaumboden mit wenigstens einer Bodenmulde für wenigstens eine Funktionsbaugruppe des Kraftfahrzeugs versehen ist, ist der Bodenbereich mit einem beweglichen Abdeckabschnitt auf Höhe der Bodenmulde versehen, der eine Zugänglichkeit zu der Bodenmulde ermöglicht. Vorzugsweise ist der Abdeckabschnitt schwenkbeweglich gelagert. Der Bodenbereich kann fest mit dem Heckmodul verbunden oder als separates Teil auf den Laderaumboden aufgelegt werden. Vorzugsweise ist der Bodenbereich zumindest abschnittsweise formstabil gestaltet.

In weiterer Ausgestaltung der Erfindung weist das Heckmodul einen Dachhimmelbereich auf, der auf einen Dachhimmel des Fahrzeuginnenraumes abgestimmt ist. Dadurch wird auch im Dachbereich ein durchgängiger und einheitlicher Übergang zwischen dem bereits vorhandenen Dachhimmel des Kraftfahrzeugs und dem erweiterten Dachhimmelbereich des Heckmoduls erzielt. Es ist auch möglich, das Heckmodul mit Seitenwandbereichen zu versehen, die auf Seitenwände des Fahrzeuginnenraumes abgestimmt sind, um an allen Seiten einen einheitlichen Übergang zwischen Heckmodul und Fahrzeuginnenraum zu erzielen.

In weiterer Ausgestaltung der Erfindung ist das Heckmodul mittels einer Führungseinrichtung zwischen einer Funktionsposition und einer Wartungsposition beweglich an der Karosserie angeordnet. Vorteilhaft ist Teil der Führungseinrichtung wenigstens ein Befestigungsmittel, vorzugsweise in Form der Scharnieranordnung. Die Führungseinrichtung kann zudem Antriebsmittel zum Anheben des Heckmoduls, insbesondere Gasdruckfedern oder mechanische Federn, aufweisen.

In weiterer Ausgestaltung der Erfindung ist dem Heckmodul innenseitig ein Inneneinrichtungsmodul zugeordnet, das zumindest abschnittsweise in einen Fahrzeuginnenraum hineinragt und in dem Fahrzeuginnenraum und/oder an dem Heckmodul lösbar befestigt ist. Dieses Inneneinrichtungsmodul kann mit unterschiedlichen Ausstattungsvarianten, abhängig vom jeweils gewählten Einsatzzweck für ein Freizeitauto, ein Handwerkerauto oder ähnliches, versehen sein. Vorzugsweise ist das Inneneinrichtungsmodul lösbar im Bereich eines Laderaumbodens des Fahrzeuginnenraumes befestigt. Hierzu sind wenigstens zwei bodenseitige Verankerungen im Fahrzeuginnenraum vorgesehen, mit denen das Inneneinrichtungsmodul unter Zuhilfenahme entsprechend abgestimmter Befestigungselemente lösbar verbunden werden kann.

Vorzugsweise ist das Inneneinrichtungsmodul mit wenigstens einem Schubfach versehen, das eine nach hinten ausziehbare Schublade umfasst. Durch die lösbare Befestigung des Inneneinrichtungsmoduls ist eine einfache Montage oder Demontage des Inneneinrichtungsmoduls ermöglicht. Vorzugsweise ist das Inneneinrichtungsmodul als formstabiles Rahmen- oder Schalenbauteil aufgebaut. Gemäß einer bevorzugten Ausführungsform ist das Inneneinrichtungsmodul zu einem Fahrzeuginnenraum hin geschlossen und mit seinen Funktionsabschnitten lediglich von hinten, d.h. von der Seite des Heckmoduls aus zugänglich. Es ist aber auch möglich, das Inneneinrichtungsmodul mit Bereichen zu versehen, die zu dem Fahrzeuginnenraum hin offen sind. Hier können insbesondere Lautsprecherboxen untergebracht werden. Andere Funktionsabschnitte können als Ablagefächer, als Aufnahmeabschnitte für Funktionsteile wie Werkzeugkasten, Erste Hilfe-Kasten oder andere, verschiedenartige und auf den jeweiligen Einsatzzweck abgestimmte Funktionsteile ausgebildet sein.

Im übrigen werden die Merkmale der Ansprüche, soweit sie zuvor nicht angeführt worden sind, hiermit zum Inhalt der vorliegenden Beschreibung gemacht. Weitere Vorteile und Merkmale der Erfindung ergeben sich somit aus den Ansprüchen wie auch aus der nachfolgenden Beschreibung bevorzugter Ausführungsbeispiele der Erfindung, die anhand der Zeichnungen dargestellt sind.
- Fig. 1: zeigt in perspektivischer Darstellung eine Ausführungsform einer erfindungsgemäßen Heckverlängerung in ihrem an einem Kraftfahrzeugheck montierten Zustand,
- Fig. 2: das Kraftfahrzeug nach Fig. 1 in einer Seitenansicht,
- Fig. 3: das Kraftfahrzeug nach den Fig. 1 und 2 mit einem in eine Wartungsposition hochgeschwenkten Heckmodul der Heckverlängerung,
- Fig. 4: das Heckmodul nach den Fig. 1 bis 3 mit einer Heckklappe, die in mehreren Öffnungspositionen dargestellt ist,
- Fig. 5: das Heckmodul nach Fig. 4 ohne eine Positionierung an dem Kraftfahrzeug mit einer Heckklappe, die mittels einer überlagerten Schwenk-/Hubbewegung in ihre Öffnungsposition überführbar ist,
- Fig. 6: eine weitere Ausführungsform eines Heckmoduls, bei dem die Heckklappe für die Überführung aus der Schließ- in die Öffnungsposition eine reine Schwenkbewegung durchführt,
- Fig. 7: in einer Heckansicht das Kraftfahrzeug nach den Fig. 1 bis 4 mit entferntem Karosserieheckteil,
- Fig. 8: eine Frontansicht des Heckmoduls nach den Fig. 1 bis 4, aus der ein frontseitiger Stirnrand des Heckmoduls erkennbar ist, der zur umlaufenden Anlage mit einer karosserieseitigen Dichtung des Karosserieheckausschnittes dient,
- Fig. 9: in vergrößerter Schnittdarstellung eine Schwenkscharnieranordnung für das Heckmodul in einem oberen Bereich des Karosserieheckausschnittes,
- Fig. 10: einen Spannverschluss zur Befestigung des Heckmoduls allein im unteren Bereich des Karosserieheckausschnittes, ebenfalls in vergrößerter Schnittdarstellung,
- Fig. 11: in schematischer Seitenansicht eine weitere Ausführungsform eines Kraftfahrzeugs mit einer Heckverlängerung und einem der Heckverlängerung zugeordneten Inneneinrichtungsmodul,
- Fig. 12: schematisch die Ausführungsform nach Fig. 11 mit geöffneter Heckklappe des Heckmoduls,
- Fig. 13: in verkleinerter Darstellung das Kraftfahrzeug nach den Fig. 11 und 12 mit in eine Montageposition nach oben geschwenktem Heckmodul und dem Inneneinrichtungsmodul in demontierter Position,
- Fig. 14: das Kraftfahrzeug nach Fig. 13 mit eingeschobenem Inneneinrichtungsmodul,
- Fig. 15: in vergrößerter Längsschnittdarstellung die Heckverlängerung gemäß den Fig. 11 bis 14 und
- Fig. 16: in einer Schnittdarstellung gemäß Fig. 15 die Heckverlängerung mit einer Darstellung zur Abfuhr der Motorabwärme.

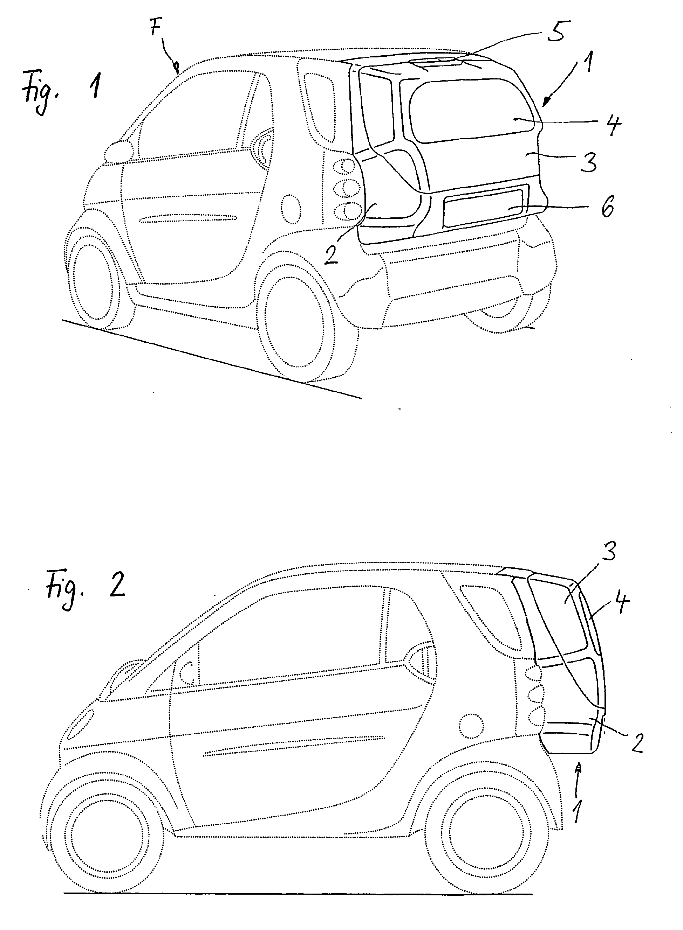

Ein Kraftfahrzeug F nach den Fig. 1 bis 4 stellt einen Personenkraftwagen in Form eines Kleinwagens dar. Beim dargestellten Ausführungsbeispiel handelt es sich um einen Kleinwagen in Form eines Smart. Die erfindungsgemäße Lösung eignet sich in gleicher Weise aber auch für andere Kraftfahrzeuge, die mit einem steil abfallenden Heck und wenigstens einem Karosserieheckteil in Form einer ein- oder mehrteiligen Heckklappe, einer ein- oder mehrteiligen Hecktür oder ähnlichem versehen sind. Das Kraftfahrzeug F ist in seinem Heckbereich mit einer Heckverlängerung versehen, die durch ein Heckmodul 1 gebildet ist. Das Heckmodul 1 ist als Kunststoffkonstruktion gestaltet und weist einen an dem Kraftfahrzeug F in nachfolgend näher beschriebener Weise festmontierten Modulteil oder Modulbereich 2 sowie einen an dem festmontierten Modulbereich 2 zwischen einer Schließposition und wenigstens einer Öffnungsposition beweglich gelagerten Modulteil oder Modulabschnitt 3 auf. Der Modulabschnitt 3 ist mit einer Heckscheibenanordnung 4 versehen. Oberhalb der Heckscheibenanordnung 4 weist das Heckmodul 1 eine hochgesetzte dritte Bremsleuchte 5 auf. Der Modulbereich 2 ist heckseitig mit einem Aufnahmebereich 6 für ein Fahrzeugkennzeichen versehen. Anstelle einer Heckscheibenanordnung kann auch eine Werbefläche vorgesehen sein.

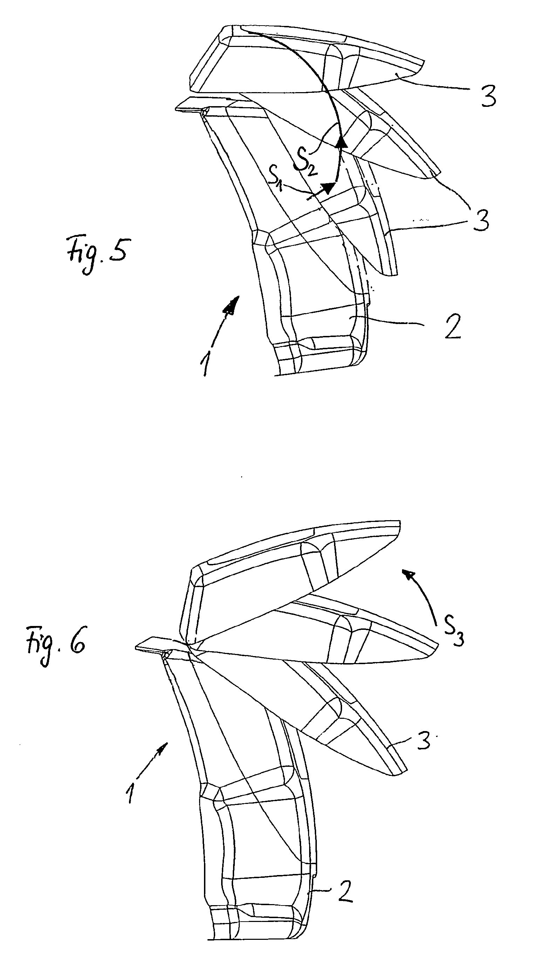

Das Heckmodul 1 ist ein vom Kraftfahrzeug F getrenntes, zweiteiliges Bauteil, das anhand der Fig. 5 bis 10 näher erläutert wird. In den Fig. 5 und 6 sind unterschiedliche Darstellungen für die bewegliche Lagerung des Modulabschnittes 3 gezeigt. Die unterschiedlichen beweglichen Lagerungen werden durch zwei nicht im Detail dargestellte unterschiedliche Scharniereinheiten verwirklicht. Bei der Ausführungsform nach Fig. 5 ist der Modulabschnitt 3 durch eine Scharniereinheit beweglich gelagert, die ein überlagertes Schwenk-/Hubgelenk aufweist. Der Hubbereich des Schwenk-/Hubgelenkes wird durch den Pfeil S₁ verdeutlicht. Der Schwenkbereich des Schwenk-/Hubgelenkes wird durch den Pfeil S₂ dargestellt. Die überlagerte Schwenk-/Hubbewegung bei einem Öffnen des als Heckklappe fungierenden Modulabschnittes 3 ermöglicht es, den Modulabschnitt 3 in die Öffnungsposition nach oben zu schwenken, ohne dass heckseitig oder nach oben ein großer Freiraum benötigt wird.

Die Darstellung in Fig. 5 stellt unterschiedliche Öffnungspositionen des Modulabschnittes 3 und damit der Heckklappe dar. Bei der Ausführungsform nach Fig. 6 wird die Scharniereinheit zur beweglichen Lagerung des Modulabschnittes 3 durch ein einfaches Schwenkgelenk gebildet. Die einfache Schwenkbewegung wird durch den Pfeil S₃ verdeutlicht.

Bei beiden Ausführungsformen unterscheiden sich lediglich die Scharniereinheiten voneinander. Der fahrzeugfest anzubringende Modulbereich 2 wie auch der beweglich gelagerte Modulabschnitt 3 sind identisch zueinander gestaltet, so dass die nachfolgende Beschreibung für beide Ausführungsformen der beweglichen Lagerung gilt.

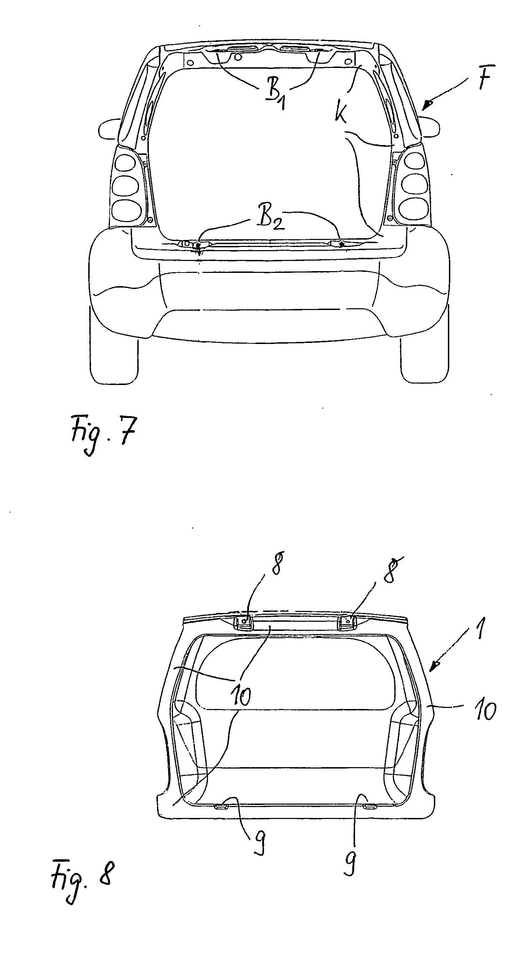

Der Modulbereich 2 weist gemäß Fig. 8 im Bereich seiner zu dem Kraftfahrzeugheck gewandten Vorderseite einen flanschartigen, umlaufenden Stirnrand 10 auf, dessen Fläche auf eine Randkontur und eine Randfläche eines umlaufenden Karosserieheckausschnittes K des Kraftfahrzeugs F abgestimmt ist, um umlaufend eine bündige Anlage zwischen dem Karosserieheckausschnitt K und dem Stirnrand 10 zu erzielen.

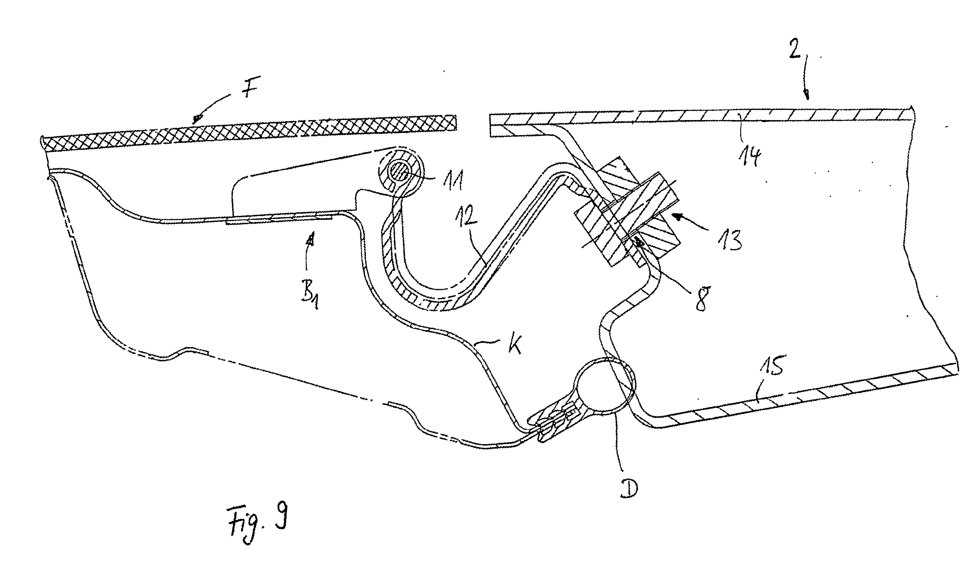

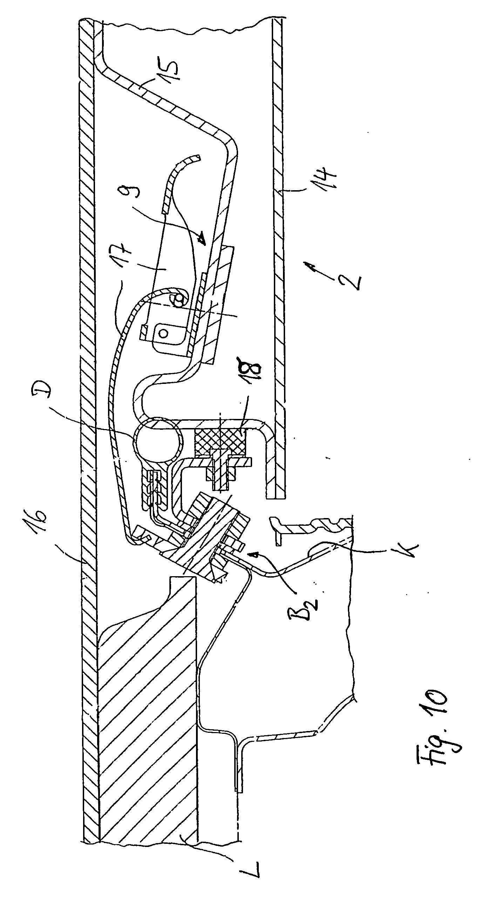

Sowohl der Modulbereich 2 als auch der bewegliche Modulabschnitt 3 sind zweischalig ausgeführt, wobei zwischen einer Innenschale 15 und einer Außenschale 14 ein Hohlraum vorgesehen ist. Der Hohlraum kann durch Isolier- oder Dämmmaterialien mit vorzugsweise energieabsorbierenden Eigenschaften aufgefüllt werden. Das separat gefertigte Heckmodul 1 wird alternativ zu einer Heckklappenanordnung des Kraftfahrzeugs F an den Karosserieheckausschnitt K angefügt. Hierzu wird zunächst in nicht näher dargestellter Weise die für das Kraftfahrzeug F ursprünglich vorhandene, zweiteilige Heckklappe entfernt. An den karosserieseitig im Bereich des Karosserieheckausschnittes sowohl oben als auch unten verbleibenden Befestigungspunkten B₁ und B₂ (Fig. 7) wird anstelle der Heckklappenanordnung das Heckmodul 1 mit Hilfe lösbarer Befestigungsmittel befestigt. Als lösbare Befestigungsmittel können die fahrzeugseitig ohnehin vorhandenen Scharniergelenke für die obere Heckklappe der ursprünglichen Heckklappenanordnung verwendet werden. Die ohnehin für die Befestigung und Halterung der Heckklappenanordnung vorgesehenen Befestigungspunkte B₁ und B₂ werden somit genutzt, um das Heckmodul 1 zu befestigen. Zur Abdichtung der Heckklappenanordnung ist fahrzeugseitig im Bereich des Karosserieheckausschnittes K eine umlaufende Dichtung D vorhanden (Fig. 9 und 10). Auch diese, ohnehin vorhandene Dichtung D verbleibt am Fahrzeug und dient nach dem Ansetzen des Heckmoduls 1 zur Abdichtung des Stirnrandes 10 des Heckmoduls 1 an dem zugehörigen Karosserieheckausschnitt K des Fahrzeugs F. Neben den für die Heckklappenanordnung vorhandenen Befestigungspunkten B₁ und B₂ wird somit auch die fahrzeugseitig bereits vorhandene heckseitige Dichtung D eingesetzt, um das Heckmodul 1 bündig und dicht an den Karosserieheckausschnitt K anzusetzen.

Der Modulbereich 2 weist - wie bereits beschrieben worden ist - frontseitig den umlaufenden Stirnrand 10 auf, der bündig und flächig auf eine entsprechende Randkontur des Karosserieheckausschnittes K aufsetzbar ist. Rückseitig ist der Modulbereich 2 mit einem rahmenartigen Ausschnitt versehen, in den der als Heckklappe ausgeführte Modulabschnitt 3 eingepasst ist. Die Heckklappe 3 stellt einen schalenartigen Körper dar, der in geschlossenem Zustand den Modulbereich 2 zu einem insgesamt schalen- oder wannenartigen Modulkörper ergänzt. Die Schalenform gewährleistet über eine gesamte Höhe eines fahrzeugseitigen Laderaumes eine entsprechende Verlängerung des Laderaumes, da das Heckmodul 1 zum Kraftfahrzeug F hin offen ist. Das Heckmodul 1 ist rucksackartig auf den Heckbereich des Kraftfahrzeugs F aufgesetzt. Das Heckmodul 1 verlängert im Bereich seiner Oberseite einen Dachbereich des Kraftfahrzeugs F. Im Bereich seiner Unterseite verlängert das Heckmodul 1 einen Laderaumboden des Laderaumes des Fahrzeuginnenraumes nach hinten.

Die Befestigung des Heckmoduls 1 an dem Karosserieheckausschnitt K ist anhand der Fig. 7 bis 10 näher dargestellt und wird nachfolgend beschrieben.

Um das Heckmodul 1 an dem Kraftfahrzeug F montieren zu können, wird zunächst eine bei dem Fahrzeug F ursprünglich vorhandene, zweigeteilte Heckklappenanordnung entfernt. Die nicht dargestellte Heckklappenanordnung weist eine obere Heckscheibe und einen unteren Klappenteil auf, wobei die Heckscheibe mit Hilfe von zwei Scharniergelenken, die an den Befestigungspunkten B₁ angeordnet sind (Fig. 7), an einem oberen Randbereich des Karosserieheckausschnittes K schwenkbeweglich angelenkt ist. Der untere Klappenteil ist ebenfalls mit Hilfe von zwei Scharniergelenken, die im Bereich der unteren Befestigungspunkte B₂ des Karosserieheckausschnittes K befestigt sind, an einem unteren Randbereich des Karosserieheckausschnittes K schwenkbeweglich angeordnet.

Um zunächst die Heckscheibe der Heckklappenanordnung demontieren zu können, wird eine Verkleidungsschale eines hinteren Dachhimmelbereiches des Fahrzeuginnenraumes entfernt. Anschließend wird eine Steckverbindung einer Stromversorgung für eine dritte Bremsleuchte getrennt. Auch eine Steckverbindung einer Stromversorgung für einen Heckscheibenwischer wird getrennt. Schließlich wird auch eine Schlauchverbindung für eine Wasserzufuhr für den Heckscheibenwischer getrennt. Dann wird die Heckscheibe von den Scharniergelenken im Bereich der Befestigungspunkte B₁ gelöst. Die Scharniergelenke verbleiben an den Befestigungspunkten B₁. Die im Bereich der Heckscheibe angeordnete dritte Bremsleuchte wird ausgebaut. Auch eine den Heckscheibenwischer aufweisende Heckscheibenwischanlage, die an der Heckscheibe angeordnet ist, wird entfernt. Es ist möglich, die bereits vorhandene dritte Bremsleuchte bei dem Heckmodul wieder einzusetzen. Vorteilhaft wird aber eine separate, neue dritte Bremsleuchte bei dem Heckmodul eingebaut, die auf das Heckmodul abgestimmt ist.

In einem nächsten Schritt wird der Klappenteil der Heckklappenanordnung demontiert. Hierfür werden entsprechende Steckverbindungen für die Stromversorgung elektrischer Teile, die an dem Klappenteil angeordnet sind, getrennt. Die Scharniergelenke werden im Bereich der Befestigungspunkte B₂ gelöst, so dass der Klappenteil gemeinsam mit der Scharniergelenken entfernt werden kann. Das Kraftfahrzeug F weist jetzt einen freiliegenden Karosserieheckausschnitt K gemäß Fig. 7 auf. An dem Heckmodul 1 sind Aufnahmen für die dritte Bremsleuchte vorgesehen, die an der Heckscheibe des ursprünglichen Kraftfahrzeugs F angeordnet war. Entsprechende Aufnahmepunkte und Steckverbindungen sind so an die bereits vorhandene Bremsleuchte angepasst, dass diese vorhandene Bremsleuchte in das Heckmodul 1 eingebaut werden kann. In der Darstellung nach Fig. 1 ist diese dritte Bremsleuchte und die entsprechende Positionierung erkennbar und mit dem Bezugszeichen 5 versehen. Bei den Ausführungsformen gemäß den Fig. 1 bis 6 ist das Heckmodul 1 mit einer Heckscheibe 4 versehen. Bei diesen Ausführungsformen wird auch die vorhandene Heckscheibenwischanlage einschließlich ihrer Waschfunktion an der Heckscheibe 4 des Heckmoduls 1 (nicht näher dargestellt) montiert und funktionsfähig vorbereitet, um mit den fahrzeugseitigen Versorgungsleitungen verbunden werden zu können. Auch ein Aufnahmebereich 6 für das Fahrzeugkennzeichen ist mit entsprechenden Befestigungsabschnitten so gestaltet, dass an dem ursprünglichen Klappenteil der Heckklappenanordnung vorhandene Aufnahmebereiche und Aufnahmepunkte mit den entsprechenden Bereichen und Punkten an dem Heckmodul 1 übereinstimmen.

An dem Heckmodul 1 sind obere Montagepunkte 8 und untere Montagepunkte 9 in ihrer Lage exakt auf die oberen und unteren Befestigungspunkte B₁ und B₂ am Karosserieheckausschnitt K abgestimmt. Die oberen Montagepunkte 8 sind bei der dargestellten Ausführungsform an den am Fahrzeug verbleibenden Scharniergelenken der ursprünglichen Heckscheibe vorgesehen. Das Heckmodul wird über Schraubflächen 13 mit den oberen Scharniergelenken 11, 12 verbunden.

Im Bereich der unteren Montagepunkte 9 werden nach dem Kniehebelprinzip arbeitende Spannverschlüsse 17 angeordnet, wobei an den Montagepunkten 9 jeweils eine Anordnung aus Spannbügel und Spannhebel befestigt wird. Im Bereich der beiden unteren, karosserieseitigen Befestigungspunkte B₂ wird jeweils ein Spannverschlusshaken (nicht näher bezeichnet) befestigt. Da die ursprünglich bei dem Fahrzeug F vorhandene Dichtung D im Bereich des Karosserieheckausschnittes K weiter verwendet wird, muss die umlaufende Anlage des Heckmoduls 1, 2 an der Dichtung D vergleichmäßigt werden. Hierzu sind Justiermöglichkeiten im Bereich der oberen Montagepunkte 8 bzw. der oberen Befestigungspunkte B₁ für die beiden Scharniergelenke 11 bis 13 vorgesehen.

Alternativ können anstelle von Spannverschlüssen für die unteren Befestigungspunkte feste Haltebügel vorgesehen werden.

Jedes Scharniergelenk 11, 12 ist mittels einer Schraubverbindung 13 an den heckmodulseitigen Montagepunkten 8 befestigt. Die Scharniergelenke an den Befestigungspunkten B₁ müssen daher nach Entfernen der ursprünglichen Heckscheibe nicht entfernt werden, sondern können karosserieseitig angelenkt bleiben. Durch die jeweilige Schraubverbindung 13 wird dann die Verbindung der Scharniergelenke 11, 12 mit dem Heckmodul 2 und die entsprechende Justierung geschaffen. Im Bereich der unteren Montagepunkte 9 ist jeweils ein Anschlagpuffer 18 vorgesehen, der so justiert werden kann, dass sich ein unterer Bereich des Heckmoduls 2 an dem jeweiligen Anschlagpuffer 18 abstützt und gleichzeitig die Dichtung D gleichmäßig belastet ist.

Wie anhand der Fig. 10 erkennbar ist, ist der Spannverschluss gegenüber einem Niveau eines ursprünglichen Laderaumbodens L des Kraftfahrzeugs vertieft angeordnet. Der ursprüngliche Laderaumboden wird durch eine als Einlegeboden gestaltete Bodenabdeckung 16 überdeckt, die sich von einem Bodenbereich des Heckmoduls 2 über eine entsprechende Aufnahmemulde für den Spannverschluss bis zu dem ursprünglichen Laderaumboden L erstreckt und diesen überdeckt. Ein Verschlusshebel des Spannverschlusses 17 wird im Bereich einer Innenhaut 15 des zweischaligen Heckmoduls 2 kippbeweglich befestigt. An dem Verschlusshebel ist der Spannbügel angeordnet, der mit einem karosserieseitig angeordneten Verschlusshaken des Spannverschlusses zusammenwirkt. Die Innenhaut 15 des Heckmoduls ist mit einer umlaufenden Randfläche versehen, die mit der karosserieseitig angeordneten, umlaufenden Dichtung D zusammenwirkt.

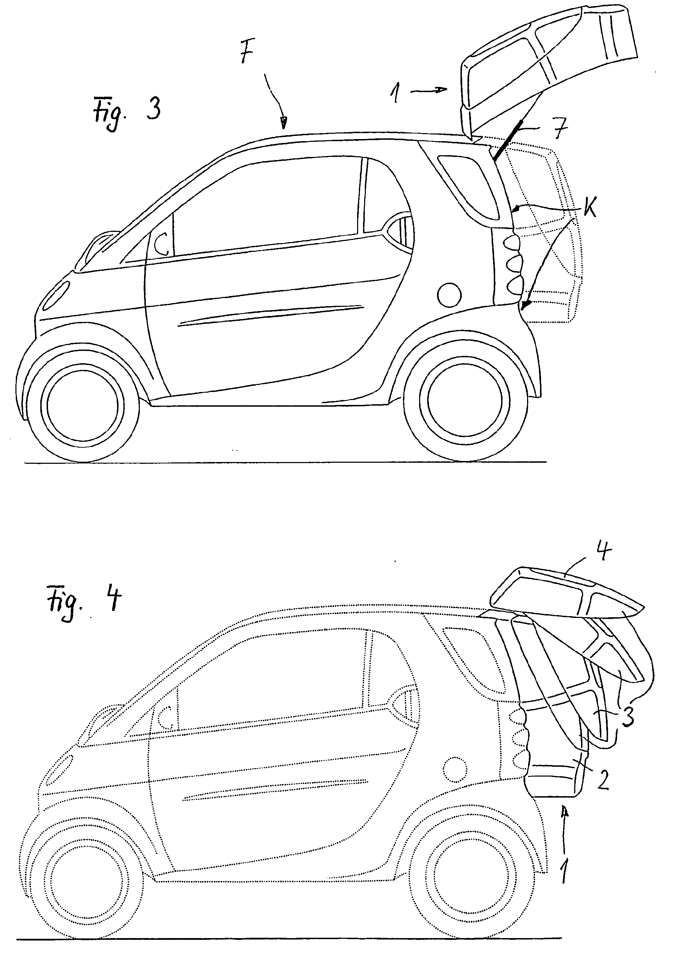

Um für Wartungszwecke im Heckbereich des Kraftfahrzeugs das gesamte Heckmodul gemäß Fig. 3 nach oben schwenken zu können, werden die beiden Spannverschlüsse oder entsprechende Haltebügel - je nach Ausführung - gelöst, nachdem die Bodenabdeckung 16 zumindest abschnittsweise entfernt worden ist. Anschließend kann um die oberen Scharniergelenke 11, 12 das gesamte Heckmodul nach oben verschwenkt werden. Eine Gasdruckfederanordnung 7 als Teil einer Führungseinrichtung dient dazu, diese Schwenkbewegung zu unterstützen und das Heckmodul 2 in seiner oberen Wartungsposition zu halten. Um das Heckmodul in seiner Öffnungsposition halten zu können, ist eine Arretiervorrichtung vorgesehen. Gemäß einer nicht dargestellten Ausführungsform weist die Arretiervorrichtung eine bewegliche Haltestange auf, die in der Öffnungsposition des Heckmoduls im Bereich des Karrosserieheckausschnittes einerseits und an dem nach oben geschwenkten Heckmodul andererseits abgestützt ist. Ähnliche Haltestangen sind bei Kraftfahrzeugen zur Arretierung einer Motorhaube in ihrer Öffnungsposition bekannt.

Bei den dargestellten Ausführungsformen ist das Heckmodul 2 zusätzlich mit einer Heckklappe 3 versehen, in der eine Heckscheibe 4 integriert ist. Die Heckklappe 3 ist mittels einer Scharnieranordnung gemäß den zuvor anhand der Fig. 4 bis 6 dargestellten Varianten schwenkbeweglich bzw. schwenk-/hubbeweglich angeordnet. Die Heckklappe 3 ist in grundsätzlich bekannter Weise in ihrer Schließposition mit einem Heckklappenverschluss versehen. Als Heckklappenverschluss kann ein bei der ursprünglichen Heckscheibe bereits vorhandener Verschluss eingesetzt werden. Alternativ wird ein separates Schloss vorgesehen, das über eine elektrische Fernbedienung mittels eines vorhandenen Fahrzeugschlüssels mit Funkübertragungsmitteln entriegelt werden kann. Zudem sind Aufnahmeabschnitte vorgesehen, um die beim Kraftfahrzeug ursprünglich vorhandene Heckscheibenwischanlage im Bereich der Heckklappe zu montieren und funktionsfähig mit entsprechenden Versorgungsleitungen des Kraftfahrzeugs zu verbinden.

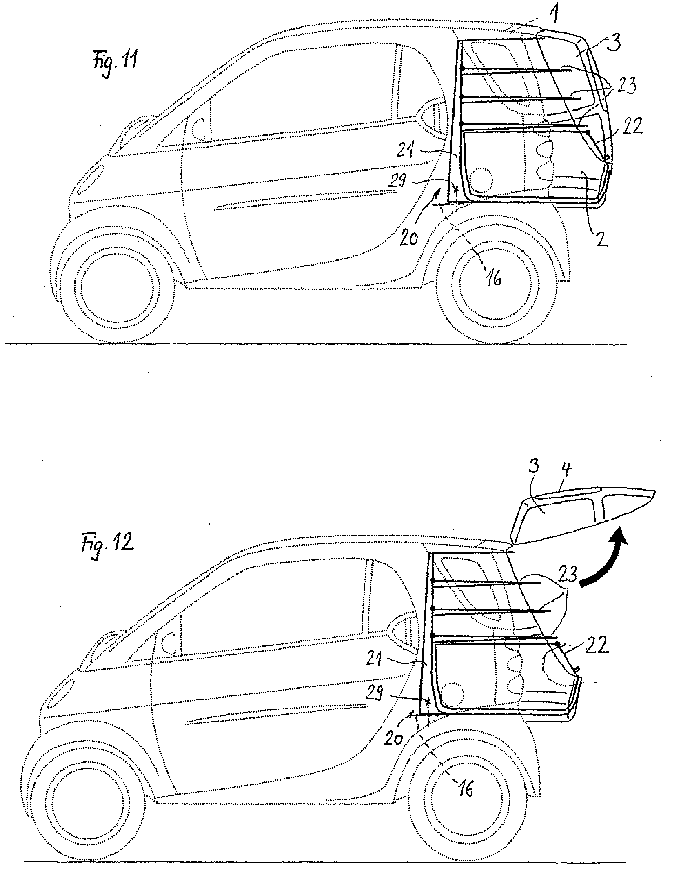

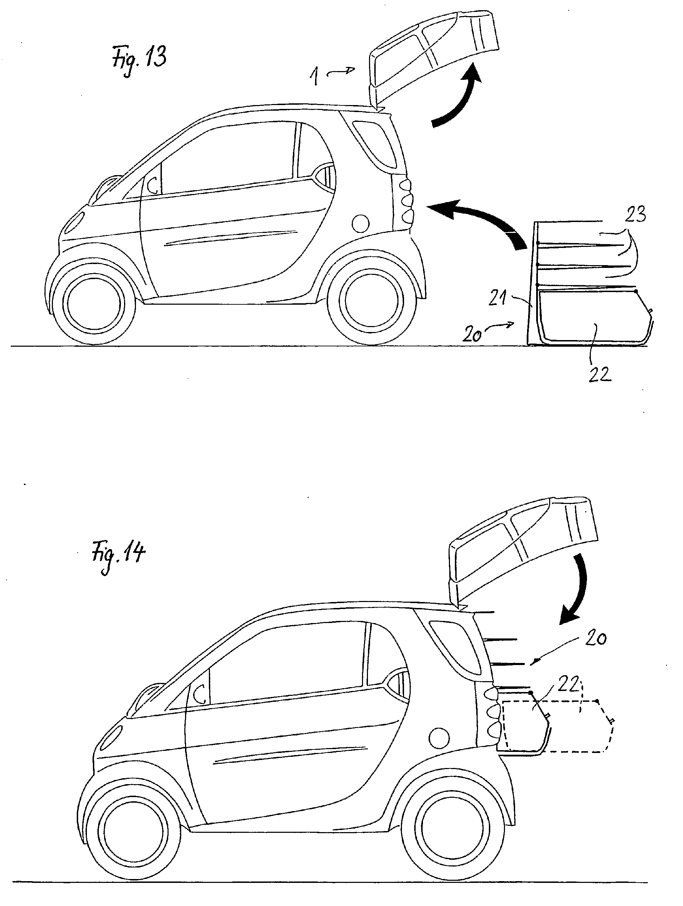

Ein Kraftfahrzeug nach den Fig. 11 bis 16 weist ein Heckmodul 1 auf, das der zuvor anhand der Zeichnungen beschriebenen Ausführungsform entspricht. Bezüglich des Heckmoduls 1 wird somit auf die zuvor beschriebene Offenbarung verwiesen. Dem Heckmodul 1 gemäß den Fig. 11 bis 14 ist innenseitig ein Inneneinrichtungsmodul 20 zugeordnet, das ein separates, formstabiles Schalen- oder Rahmenbauteil 21 aufweist. Das Schalen- oder Rahmenbauteil 21 entspricht in seiner Höhe und seiner Breite zumindest weitgehend einer Höhe und einer Breite des Karrosserieheckausschnittes des Kraftfahrzeugs und wird bei geöffnetem Heckmodul 1 (Fig. 13) von hinten her in den Karrosserieheckausschnitt eingeschoben. Im eingeschobenen Zustand ragt das Inneneinrichtungsmodul 20 in den Fahrzeuginnenraum des Kraftfahrzeugs hinein und ragt im übrigen mit seiner heckseitigen Kontur so weit über das Fahrzeugheck hinaus, dass das Heckmodul 1 geschlossen werden kann. In der Schließposition des Heckmoduls ragen entsprechende Funktionsabschnitte des Inneneinrichtungsmoduls 21 in das zum Fahrzeuginnenraum hin offene Heckmodul 1 hinein. Das Inneneinrichtungsmodul 20 wird an einem Laderaumboden des Fahrzeuginnenraumes lösbar befestigt. Hierzu sind entsprechende Verankerungen im Bereich des Laderaumbodens 16 vorgesehen, die durch die Bezugszeichen 29 in den Fig. 11 und 12 angedeutet sind. Das anhand der Fig. 11 bis 14 dargestellte Inneneinrichtungsmodul 20 ist nach vorne, d.h. zu dem nach vorne gerichteten Fahrzeuginnenraum hin, geschlossen ausgeführt. Heckseitig weist das Schalen- oder Rahmenbauteil 21 mehrere Staufächer 23 auf. In einem unteren Bereich ist zudem ein großes Schubfach vorgesehen, das eine Schublade 22 umfasst. Die Schublade 22 ist gemäß der Darstellung nach Fig. 14 ausziehbar oder aus dem Fahrzeug entnehmbar. Die Schublade 22 ist wannenförmig und flüssigkeitsdicht ausgeführt, so dass Tropfmengen von mit Flüssigkeit gefüllten Behältern, die in dem Inneneinrichtungsmodul 21 transportiert werden, von der Schublade 22 aufgefangen werden können. Wie anhand der Fig. 11, 12 und 14 erkennbar ist, ist die Tiefe des Inneneinrichtungsmoduls 21 so auf das Volumen des Heckmoduls 1 abgestimmt, dass in geschlossenem Zustand des Heckmoduls 1 das Inneneinrichtungsmodul 21 mit seiner heckseitigen Kontur nahezu bündig mit entsprechenden Innenflächen des Heckmoduls 1 abschließt.

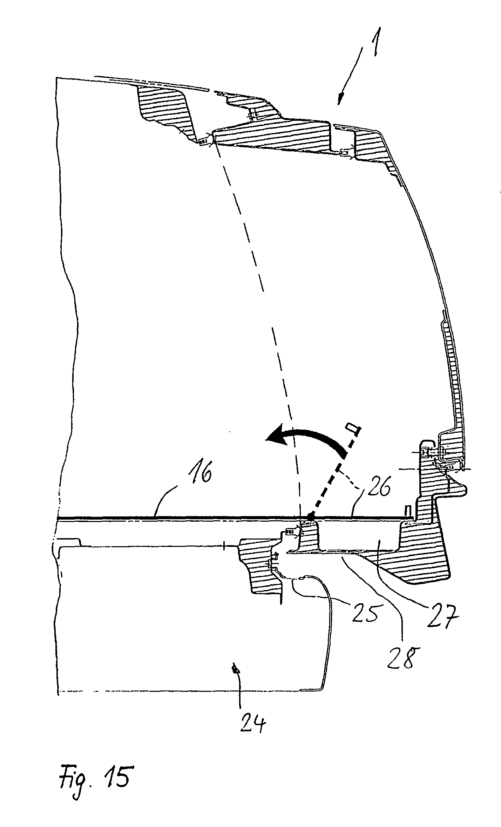

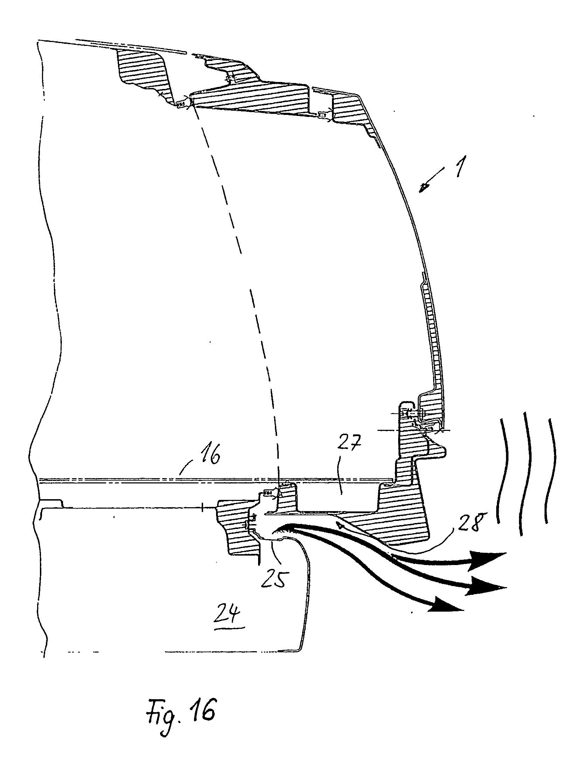

Anhand der Fig. 15 und 16 ist erkennbar, dass das Heckmodul 1 im Bereich seiner Unterseite mit einer Strömungsleitgeometrie 28 versehen ist, die einen Abwärmekanal für aus einem Motorraum 24 des Kraftfahrzeugs über entsprechende Austrittsöffnungen 25 abgeleitete Motorabwärme (siehe Pfeildarstellung) bildet. Dadurch wird eine ausreichende Abluftabführung aus dem Motorraum erzielt. Zudem dient die warme Abluft zur Aufwärmung des Heckmoduls 1.

Das Heckmodul 1 weist bodenseitig eine Bodenmulde 27 auf, in der eine Funktionsbaugruppe beliebiger Art untergebracht werden kann. Die Bodenmulde 27 kann auch lediglich als Staufach dienen. Der Laderaumboden des Kraftfahrzeugs ist mit einem lose aufgelegten Bodenbereich 16 versehen, der zumindest abschnittsweise formstabil ausgeführt ist. Auf Höhe der Bodenmulde 27 weist der Bodenbereich 16 einen klappenartig formstabil ausgeführten Abdeckabschnitt 26 auf, der an dem übrigen Bodenbereich 16 schwenkbeweglich angelenkt ist, um eine Überführung in die Öffnungsposition gemäß der Pfeildarstellung nach Fig. 15 zu ermöglichen. Dadurch ist eine einfache Zugänglichkeit der Bodenmulde 27 gewährleistet.

Bei nicht dargestellten Ausführungsformen ist das Heckmodul außenseitig mit Halterungen oder Aufnahmebereichen für wenigstens einen Funktionsträger versehen, der für die Aufnahme von Freizeitgeräten wie Skier, Snowboards, Fahrräder o.ä. dient. Es ist auch möglich, einen derartigen Funktionsträger direkt in eine Außenhaut des Heckmoduls zu integrieren.

Bei weiteren, nicht dargestellten Ausführungsformen sind die Innenseiten des Heckmoduls mit Aufnahmeabschnitten zur Halterung von Regalsystemen oder zur Aufnahme von Stau- oder Funktionsbehältnissen wie Werkzeugkästen und ähnlichem versehen.

## Patentansprüche

1. Heckverlängerung für ein Kraftfahrzeug, die an einem Karosserieheckausschnitt mit Hilfe lösbarer Befestigungsmittel befestigbar ist, wobei ein formstabiles Heckmodul (1, 2) vorgesehen ist, dessen Randkontur auf einen umlaufenden Rand des Karosserieheckausschnittes (K) derart abgestimmt ist, dass das Heckmodul (1, 2) umlaufend bündig an den Karosserieheckausschnitt (K) anfügbar ist, und wobei die Befestigungsmittel derart auf karosserieseitige Befestigungspunkte (B₁, B₂) wenigstens eines für ein Verschließen des Karosserieheckausschnittes (K) vorgesehenen Karosserieheckteiles abgestimmt sind, dass das Heckmodul (1, 2) unter Verwendung der Befestigungspunkte (B₁, B₂) für das Karosserieheckteil bei entferntem Karosserieheckteil an dem Karosserieheckausschnitt (K) lösbar befestigbar ist, wobei eine karosserieseitig vorhandene Dichtung (D) zur Abdichtung eines Stirnrandes (10) des Heckmoduls an dem Karosserieheckausschnitt (K) vorgesehen ist, **dadurch gekennzeichnet, dass** dass das ganze Heckmodul (1, 2) mittels einer Scharnieranordnung (11 bis 13) zwischen einer Schließposition und einer Öffnungsposition beweglich an der Karosserie angeordnet ist.

2. Heckverlängerung nach Anspruch 1, **dadurch gekennzeichnet, dass** das Heckmodul (1, 2) zumindest abschnittsweise zweischalig ausgebildet ist und zu einem Fahrzeuginnenraum hin offen ist.

3. Heckverlängerung nach Anspruch 1, **dadurch gekennzeichnet, dass** das Heckmodul (1, 2) mehrteilig ausgeführt ist.

4. Heckverlängerung nach Anspruch 1, **dadurch gekennzeichnet, dass** als Befestigungsmittel wenigstens eine Scharnieranordnung (11 bis 13) vorgesehen ist.

5. Heckverlängerung nach Anspruch 1, **dadurch gekennzeichnet, dass** als Befestigungsmittel wenigstens ein Spannverschluss (17) vorgesehen ist.

6. Heckverlängerung nach Anspruch 3, **dadurch gekennzeichnet, dass** wenigstens ein Modulteil (3) des Heckmoduls zwischen einer Schließposition und wenigstens einer Öffnungsposition relativ zu einem stationären Modulteil (2) beweglich angeordnet ist.

7. Heckverlängerung nach Anspruch 6, **dadurch gekennzeichnet, dass** das bewegliche Modulteil mittels einer Scharniereinheit an dem Heckmodul (1, 2) beweglich gelagert ist.

8. Heckverlängerung nach Anspruch 7, **dadurch gekennzeichnet, dass** als Scharniereinheit ein Schwenkgelenk vorgesehen ist.

9. Heckverlängerung nach Anspruch 7, **dadurch gekennzeichnet, dass** als Scharniereinheit ein Schwenk-/Hubgelenk mit überlagerten Bewegungsbahnen vorgesehen ist.

10. Heckverlängerung nach Anspruch 1, **dadurch gekennzeichnet, dass** das Heckmodul (1, 2) einen Bodenbereich (16) aufweist, der in montiertem Zustand des Heckmoduls einen Laderaumboden (L) des Fahrzeuginnenraumes überdeckt.

11. Heckverlängerung nach Anspruch 10, **dadurch gekennzeichnet, dass** wenigstens ein formstabiler Abschnitt des Bodenbereichs eine Bodenmulde des Laderaumbodens (L) überdeckt und zwischen einer die Bodenmulde freigebenden Öffnungsposition und einer die Bodenmulde verschließenden Abdeckposition beweglich gelagert ist.

12. Heckverlängerung nach Anspruch 1, **dadurch gekennzeichnet, dass** dem Heckmodul innenseitig ein Inneneinrichtungsmodul (20) zugeordnet ist, das zumindest abschnittsweise in einen Fahrzeuginnenraum hineinragt und in dem Fahrzeuginnenraum und/oder an dem Heckmodul lösbar befestigt ist.

13. Heckverlängerung nach Anspruch 12, **dadurch gekennzeichnet, dass** das Inneneinrichtungsmodul (20) ein formstabiles Rahmen- oder Schalenbauteil (21) aufweist, das sich zumindest weitgehend über eine Gesamthöhe und eine Gesamtbreite des Karrosserieheckausschnittes erstreckt.

14. Heckverlängerung nach Anspruch 12, **dadurch gekennzeichnet, dass** das Inneneinrichtungsmodul (20) mehrere Funktionsabschnitte wie wenigstens eine Aufnahmeeinheit (23) oder wenigstens ein Staufach (22) aufweist, die von einer Heckseite und/oder von einer Frontseite her - jeweils auf eine Fahrzeuglängsrichtung bezogen - zugänglich sind.

15. Heckverlängerung nach einem der Ansprüche 12 bis 14, **dadurch gekennzeichnet, dass** das Inneneinrichtungsmodul (20) mit seiner zu dem Heckmodul abragenden Kontur so gestaltet ist, dass das Heckmodul bei montiertem Inneneinrichtungsmodul in seine Öffnungs- und seine Schließposition überführt werden kann.

16. Heckverlängerung nach Anspruch 1, **dadurch gekennzeichnet, dass** das Heckmodul (1) im Bereich seiner Unterseite mit einer Strömungsleitgeometrie (28) versehen ist, die einen Abwärmekanal für aus einem Motorraum (24) des Kraftfahrzeugs über entsprechende Austrittsöffnungen (25) abgeleitete Motorabwärme bildet.

## Claims

1. The luggage compartment extension for a vehicle, which is fastenable on a vehicle's luggage compartment opening with the help of detachable fastening means, wherein a rigid rear module (1, 2) is provided, of which the edge contour is matched to a peripheral edge of the vehicle's luggage compartment opening (K) such that the rear module (1, 2) is attachable peripherally flush on the vehicle's luggage compartment opening (K), and wherein the fastening means are matched with the body's side fastening points (B1, B2) such that at least one of the vehicle's rear parts is matched to close the vehicle's luggage compartment opening (K), so that the rear module (1, 2) is detachably fixed by using the fastening points (B1, B2) for the vehicle's rear part when said vehicle rear part is removed from said luggage compartment opening (K), wherein a seal (D) is provided on the body's side for sealing a face edge (10) of the rear module of the vehicle luggage compartment opening (K), **characterised in that** the rear module (1, 2) is movably located on the vehicle by the means (11 to 13) between a close-position and an open-position.

2. A luggage compartment extension according to Claim 1 **characterised in that** at least a section of the rear module (1, 2) is formed as a double shell and is open towards the interior of the vehicle.

3. A luggage compartment extension according to Claim 1 **characterised in that** the rear module (1, 2) is formed of multiple parts.

4. A luggage compartment extension according to Claim 1 **characterised in that** at least a hinge arrangement (11 to 13) is provided as fastening means.

5. A luggage compartment extension according to Claim 1 **characterised in that** at least one clamping arrangement (17) is provided as fastening means.

6. A luggage compartment extension according to Claim 3, **characterised in that** at least one module part (3) of the rear module between a close-position and at least one open-position is provided movably relative to a stationary module part (2).

7. A luggage compartment extension according to Claim 6 **characterised in that** the movable module part is supported movably by means of a hinge unit on the rear module (1, 2).

8. A luggage compartment extension according to Claim 7 **characterised in that** a swivel joint is provided as hinge unit.

9. A luggage compartment extension according to Claim 7 **characterised in that** a swivel/stroke joint with overlapping movement tracks is provided as hinge unit.

10. A luggage compartment extension according to Claim 1 **characterised in that** the rear module (1, 2) features a floor surface (16), which, in the mounted state of the rear module, covers a luggage compartment floor (L) of the interior of the vehicle.

11. A luggage compartment extension, according to Claim 10, **characterised in that** at least a rigid section of the floor area covers the luggage compartment floor-depression (L), and is movably mounted between an open-position of the floor depression and a close-position of said closed floor depression.

12. A luggage compartment extension according to Claim 1, **characterised in that** an interior fitting module (20) is provided on the internal side of the rear module, which protrudes at least section-wise into the interior of the vehicle and is detachably fastened in the vehicle's interior space and/or on the rear module.

13. A luggage compartment extension according to Claim 12, **characterised in that** the interior fitting module (20) features a rigid frame or a shell component (21), which extensively runs over at least an overall height and an overall width of the luggage compartment opening.

14. A luggage compartment extension according to Claim 12, **characterised in that** the interior fitting module (20) features several functional sections like at least a shelving unit (23) or at least a stowage space (22), which are accessible from a rear side and/or from a front side, viewed - respectively along a vehicle's longitudinal direction.

15. A luggage compartment extension according to one of Claims 12 to 14 **characterised in that** the interior fitting module (20) with its contour projecting towards the rear module is shaped such that the rear module can be transformed into its open- and close-position when the interior fitting module is mounted.

16. A luggage compartment extension according to Claim 1, **characterised in that** the rear module (1) is provided with a flow guide geometry (28) in the area of its under side, which forms a heat-dissipation channel for engine heat routed from an engine compartment (24) of the vehicles via corresponding outlet openings (25).

## Revendications

1. Partie de prolongement arrière pour véhicule automobile, pouvant être fixée à l'aide de moyens de fixation détachables contre une découpe ménagée dans la partie arrière de la carrosserie, un module arrière (1, 2) de forme rigide étant prévu dont le contour périmétrique est harmonisé avec le bord périmétrique de la découpe (K) ménagée dans la partie arrière de la carrosserie de telle sorte que le module arrière (1, 2) soit joignable périmétriquement et en affleurement de surfaces contre la découpe (K) ménagée dans la partie arrière de la carrosserie, et les moyens de fixation étant harmonisés de telle sorte avec des points de fixation (B₁, B₂), côté carrosserie, au moins d'une pièce arrière de carrosserie prévue pour obturer la découpe (K) ménagée dans la partie arrière de la carrosserie, que le module arrière (1, 2), se fixe de façon détachable, en utilisant les points de fixation (B₁, B₂) de la partie arrière de la carrosserie et après avoir enlevé la partie arrière de la carrosserie, contre la découpe (K) ménagée dans la partie arrière de la carrosserie, un joint (D) présent côté carrosserie et servant à étancher un bord frontal (10) du module arrière étant prévu contre la découpe (K) ménagée dans la partie arrière de la carrosserie, **caractérisée en ce que** l'ensemble du module arrière (1, 2) est agencé de manière mobile contre la carrosserie au moyen d'une articulation à charnières (11 à 13) permettant d'alterner entre une position de fermeture et une position d'ouverture.

2. Partie de prolongement arrière selon la revendication 1, **caractérisée en ce que** le module arrière (1, 2) est configuré double coque au moins dans certaines parties et qu'il est ouvert en direction d'un habitacle de véhicule.

3. Partie de prolongement arrière selon la revendication 1, **caractérisée en ce que** le module arrière (1, 2) a été réalisé en plusieurs parties.

4. Partie de prolongement arrière selon la revendication 1, **caractérisée en ce qu'**a été prévue, comme moyen de fixation, au moins une articulation à charnières (11 à 13).

5. Partie de prolongement arrière selon la revendication 1, **caractérisée en ce qu'**a été prévue, comme moyen de fixation, au moins une fermeture à genouillère (17).

6. Partie de prolongement arrière selon la revendication 3, **caractérisée en ce qu'**au moins une pièce (3) du module arrière est agencée de manière mobile, relativement à une pièce fixe (2) du module, entre une position de fermeture et au moins une position d'ouverture.

7. Partie de prolongement arrière selon la revendication 6, **caractérisée en ce que** la partie mobile du module repose, de manière mobile au moyen d'une unité à charnière, contre le module arrière (1, 2).

8. Partie de prolongement arrière selon la revendication 7, **caractérisée en ce qu'**une articulation pivotante est prévue à titre d'unité à charnière.

9. Partie de prolongement arrière selon la revendication 7, **caractérisée en ce qu'**une articulation à pivotement / levage à trajectoires superposées est prévue en tant qu'unité à charnière.

10. Partie de prolongement arrière selon la revendication 1, **caractérisée en ce que** le module arrière (1, 2) présente une zone de fond (16) qui, lorsque le module arrière se trouve à l'état monté, recouvre un fond de compartiment à bagages (L) de l'habitacle du véhicule.

11. Partie de prolongement arrière selon la revendication 10, **caractérisée en ce qu'**au moins une partie de forme rigide de la zone du fond recouvre une auge du fond (L) du compartiment à bagages et que cette partie se trouve en appui mobile entre une position d'ouverture libérant l'auge de fond et une position de recouvrement obturant l'auge de fond.

12. Partie de prolongement arrière selon la revendication 1, **caractérisée en ce qu'**au module arrière est attribué, côté intérieur, un module (20) d'aménagement intérieur dont au moins certaines parties font saillie dans un habitacle de véhicule et qui est fixé de façon détachable dans l'habitacle de véhicule et/ou contre le module arrière.

13. Partie de prolongement arrière selon la revendication 12, **caractérisée en ce que** le module (20) d'aménagement intérieur présente un composant (21) rigide de cadre ou de coque qui s'étend au moins largement sur une hauteur totale et une largeur totale de la découpe ménagée à l'arrière de la carrosserie.

14. Partie de prolongement arrière selon la revendication 12, **caractérisée en ce que** le module (20) d'aménagement intérieur présente plusieurs parties fonctionnelles telles qu'au moins une unité réceptacle (23) ou au moins un compartiment de rangement (22) qui sont accessibles depuis un côté arrière et/ou depuis un côté frontal, ceci chaque fois référé à une direction longitudinale du véhicule.

15. Partie de prolongement arrière selon l'une des revendications 12 à 14, **caractérisée en ce que** le contour, en saillie vers le module arrière, du module (20) d'aménagement intérieur est configuré de telle sortie que le module arrière, lorsque le module d'aménagement intérieur a été monté, est transférable vers sa position d'ouverture et sa position de fermeture.

16. Partie de prolongement arrière selon la revendication 1, **caractérisée en ce que** le module arrière (1) présente, dans la zone de sa face inférieure, une géométrie (28) guide-flux formant un canal destiné à la chaleur sortante du moteur, ladite chaleur quittant le compartiment moteur (24) du véhicule automobile via des orifices de sortie (25) correspondants.
